# EUROPÄISCHE PATENTANMELDUNG

(11) **EP 4 410 546 A1**
(43) Veröffentlichungstag der Anmeldung: **07.08.2024**
(21) Anmeldenummer: 24152914.8
(22) Anmeldetag: 19.01.2024
(51) Int. Cl.: B32B 27/08, B32B 27/30, B32B 27/32, B32B 27/36

(54) **MEHRSCHICHTIGES PROFILTEIL**

(30) Priorität: 06.02.2023 DE 102023102824
(71) Anmelder: Renolit SE, 67547 Worms (DE)
(72) Erfinder: STRUVE, Friedrich-Wilhelm, 83024 Rosenheim (DE); KRETZSCHMAR, Eike, 64673 Zwingenberg (DE)
(74) Vertreter: Zellentin & Partner mbB Patentanwälte

(57) **Zusammenfassung**

Mehrschichtiges Profilteil umfassend einen Kern (1) aus einer Mischung enthaltend gebrauchten Glas-, Mineral- oder Carbonfaserverbundstoff und ein erstes thermoplastisches Polymer, eine äußere Schicht (2, 2a) enthaltend ein zweites thermoplastisches Polymer, das mit dem ersten thermoplastischen Polymer kompatibel ist und dem kein oder eine geringere Menge an gebrauchtem Glas-, Mineral- oder Carbonfaserverbundstoff als der Mischung des Kerns (1) zugefügt ist, und die mit dem Kern (1) zumindest an einer Seite koextrudiert ist, wobei das Profilteil zumindest an einer Seite, an der der Kern (1) von der äußeren Schicht (2, 2a) abgedeckt ist, eine Dekorfolie (3) aufweist, die eine gefärbte und/oder bedruckte Basisfolie aus PVC, Polyacrylat oder Polyolefin umfasst, die mit einer transparenten Schmelzbeschichtung auf Polyurethanbasis versehen ist, Verfahren zu seiner Herstellung, sowie Verwendung von gebrauchtem Glas-, Mineral- oder Carbonfaserverbundstoff als Faserverstärkung für ein erstes thermoplastisches Polymer zur Herstellung von Profilteilen.

## Beschreibung

Die vorliegende Erfindung betrifft mehrschichtige Profilteile, ihre Herstellung und die Verwendung von gebrauchten Glas-, Mineral- oder Carbonfaserverbundstoffen dazu.

Im Bereich der Bodenbeläge im Außenbereich sind neben natürlichen Materialien wie Holz und Stein auch künstliche Materialien wie Beton und WPC (Abkürzung für Wood-Plastic-Composite, d.h. Mischungen aus Holzfasern und thermoplastischem Polymer) in Gebrauch. Durch den Einsatz von künstlichen Materialien lassen sich natürliche Ressourcen schonen aber auch Eigenschaften optimieren. WPC Dielen haben beispielsweise einen geringeren Pflegeaufwand als gleiche Produkte aus Holz.

Ein anderer wichtiger Aspekt ist die Frage des Recycling. Im Sinne der Nachhaltigkeit wird immer mehr gefordert, dass Produkte nicht nur bei der Herstellung Umwelt und Ressourcen schonen sollen, sondern auch nach Erreichen der Nutzungsdauer einer sinnvollen weiteren Verwendung zugeführt werden können. Hier sind Profilteile aus WPC solchen aus Kunststein und Holz überlegen, weil sie sich einschmelzen und zu neuen WPC-Produkten formen lassen.

Allerdings sind Terrassendielen und andere Profilteile aus WPC besonders im Außenbereich, wo große Temperaturschwankungen auftreten, hinsichtlich der thermischen Ausdehnung alles andere als optimal.

Es ist bekannt, dass Mischungen aus gebrauchten Glas- oder Carbonfaserverbundstoffen und thermoplastischen Polymeren zu sehr formbeständigen Profilteilen extrudiert werden können. Neuerdings sind auch analoge Mineralfaserverbundstoffe, speziell Basaltfaserverbundstoffe in Gebrauch. Verbraucher stellen aber auch hohe Anforderungen an das Aussehen von Terrassendielen und ähnlichen Produkten. Daher sind solche Extrudate im Gegensatz zu den WPC Profilteilen, die durch die Holzfasern ein zu Naturholz ähnliches Aussehen erlangen, bisher als Terrassendielen nicht brauchbar. Gemäß WO 2020/148484 A1 sollen mehrschichtige Erzeugnisse mindestens eine Schicht aus End-of-Life-Abfällen oder Produktionsabfällen von faserverstärktem Duroplast, die zu einer thermoplastischen Matrix kombiniert werden, umfassen. Die thermoplastische Matrix und der duroplastische Kunststoff sind durch ein oder mehrere Bindemittel oder Haftvermittler chemisch miteinander verbunden. Die Oberflächenschicht soll keine End-of-Life-Abfälle enthalten und so optisch akzeptabel sein. Die von Verbrauchern geforderte z.B. Holz- oder Steinoptik erreichen solche Erzeugnisse nicht.

Überraschend wurde nun gefunden, dass mehrschichtige Profilteile, bei denen die Mischung aus thermoplastischem Polymer und gebrauchtem Glas-, Mineral- oder Carbonfaserverbundstoff als Kern von einer äußeren Schicht mit wenig bis keinem gebrauchten Glas-, Mineral- oder Carbonfaserverbundstoff eingeschlossen ist, mit Dekorfolien ummantelt werden können. So sind optisch und hinsichtlich Gebrauchs- und Pflegeeigenschaften brauchbare Profilteile erhältlich, die mehrere Probleme auf einmal lösen:
- die gebrauchten Glas-, Mineral- oder Carbonfaserverbundstoffe finden eine hochwertige Anwendung
- es sind Profilteile mit einem hervorragenden mechanischen Eigenschaftsspektrum zugänglich, insbesondere einer geringen thermischen Ausdehnung und einer sehr guten Stabilität/Belastbarkeit
- Optik, Oberflächenbeschaffenheit und Pflegebedarf lassen sich durch die Dekorfolie anpassen bzw. optimieren.

Die vorliegende Erfindung löst somit die Aufgabe, optimierte Profilteile für Außenanwendungen bereitzustellen, durch mehrschichtige Profilteile umfassend einen Kern aus einer Mischung enthaltend gebrauchten Glas-, Mineral- oder Carbonfaserverbundstoff und ein erstes thermoplastisches Polymer, wobei der Kern von einer äußeren Schicht enthaltend ein zweites thermoplastisches Polymer, das mit dem ersten thermoplastischen Polymer kompatibel ist und dem kein oder eine geringere Menge an gebrauchten Glas-, Mineral- oder Carbonfaserverbundstoff als der Mischung des Kerns zugefügt ist, an zumindest einer Seite koextrudiert ist und wobei das Profilteil zumindest an einer Seite, an der der Kern von der äußeren Schicht abgedeckt ist, eine Dekorfolie aufweist, wobei die Dekorfolie eine gefärbte und/oder bedruckte Basisfolie aus PVC, Polyacrylat oder Polyolefin umfasst, die mit einer transparenten Schmelzbeschichtung auf Polyurethanbasis versehen ist. Die Aufgabe wird weiter durch ein Verfahren zur Herstellung von Profilteilen gelöst, bei dem ein Kern aus einer Mischung enthaltend gebrauchten Glas-, Mineral- oder Carbonfaserverbundstoff und ein erstes thermoplastisches Polymer zumindest an einer Seite mit einer äußeren Schicht enthaltend ein zweites thermoplastisches Polymer, das mit dem ersten thermoplastischen Polymer kompatibel ist und dem kein oder eine geringere Menge an gebrauchtem Glas-, Mineral- oder Carbonfaserverbundstoff als der Mischung des Kerns zugefügt ist, koextrudiert wird und wobei das Profilteil zumindest an einer Seite, an der der Kern von der äußeren Schicht abgedeckt ist, mit einer Dekorfolie, die eine gefärbte und/oder bedruckte Basisfolie aus PVC, Polyacrylat oder Polyolefin umfasst, die mit einer transparenten Schmelzbeschichtung auf Polyurethanbasis versehen ist, verbunden wird. Die Aufgabe wir außerdem durch die Verwendung von gebrauchtem Glas-, Mineral- oder Carbonfaserverbundstoff als Faserverstärkung für ein erstes, thermoplastisches Polymer zur Herstellung von Profilteilen gelöst, wobei der gebrauchte Glas-, Mineral- oder Carbonfaserverbundstoff mit dem ersten thermoplastischen Polymer gemischt wird, diese Mischung als Kern zumindest an einer Seite mit einer äußeren Schicht aus einem zweiten thermoplastischem Polymer, das mit dem ersten thermoplastischen Polymer kompatibel ist und dem kein oder eine geringere Menge an gebrauchten Glas-, Mineral- oder Carbonfaserverbundstoff als der Mischung des Kerns zugefügt ist, koextrudiert wird und das Profilteil zumindest an einer Seite, an der der Kern von der äußeren Schicht abgedeckt ist mit einer Dekorfolie, die eine gefärbte und/oder bedruckte Basisfolie aus PVC, Polyacrylat oder Polyolefin umfasst, die mit einer transparenten Schmelzbeschichtung auf Polyurethanbasis versehen ist, verbunden wird.

Glas-, Mineral- oder Carbonfaserverbundstoffabfälle fallen in vielen Bereichen an, da sich Verbundstoffe aus Glasfasern, Mineralfasern bzw. Carbonfasern und Duromeren seit längerem zunehmender Beliebtheit erfreuen, z.B. für Rotorblätter von Windkraftanlagen, Bootsrümpfe, Karrosserieteile von Autos, Surfboards, Fahrradrahmen etc. Ein Recycling ist schwierig, da weder das gesamte Material eingeschmolzen werden kann noch eine Trennung der Fasern vom Duromeren einfach und kostengünstig machbar ist. Um eine Weiterverwendung zu ermöglichen wurde vorgeschlagen, die Glas-, Mineral- oder Carbonfaserverbundstoffabfälle zu zerkleinern und mit thermoplastischen Polymeren zu mischen, siehe z.B. Kunststoffxtra 6/2021, Seiten 8+9, https://issuu.com/sigwerbgmbh/docs/kx_6-2021_web. Das Resultat ist ein thermoplastisches Granulat, das zu vielerlei Produkten verarbeitet werden kann. Auch die hergestellten Produkte können recycelt werden, sofern sich die aus der Mischung gefertigten Teile von anderen Teilen des Produkts trennen lassen. Die zerkleinerten Glas-, Mineral- oder Carbonfaserverbundstoffabfälle werden im Rahmen der vorliegenden Erfindung als gebrauchte Glas-, Mineral- oder Carbonfaserverbundstoffe bezeichnet.

Erfindungsgemäß werden Mischungen aus einem ersten thermoplastischen Polymer und gebrauchten Glas-, Mineral- oder Carbonfaserverbundstoffen als Kern von Profilteilen eingesetzt, wobei der Kern von einer äußeren Schicht aus einem zweiten thermoplastischen Polymer eingeschlossen oder an einer Seite ummantelt wird und zumindest an einer Seite eine Dekorfolie mit dem Profilteil verbunden wird. Sofern die äußere Schicht den Kern nur an einer Seite ummantelt, ist die Dekorfolie an dieser Seite angebracht. Diese Seite ist dann in der Regel die äußere, im Gebrauch sichtbare Oberfläche. Bei Terrassendielen ist es die Oberseite sowie typischerweise auch die senkrechten Seiten zumindest teilweise, nämlich soweit diese sichtbar sind. Im Rahmen der vorliegenden Erfindung meint oben, oberhalb und Oberseite die Gebrauchsoberfläche des Profilteils, d.h. die vom Untergrund (z.B. bei Terrassendielen) oder Innenraum (z.B. wenn die Profilteile die Wand von Gefäßen, Behältern usw. bilden) abgewandte Seite. Unten, unterhalb und Unterseite meint dementsprechend die im Gebrauch untere bzw. innere Seite. Im Falle von Profilteilen, bei denen mehr als eine bzw. alle Seiten sichtbar sind, wie z.B. bei Zaunelementen, ummantelt die äußere Schicht den Kern, ggfs. bis auf die Schnittkanten, vollständig und die Dekorfolie wird rundum, d.h. auf allen Seiten angebracht. Da die Schnittkanten der Profilteile im Vergleich zu den anderen Seiten eine sehr geringe Fläche haben, stellt die fehlende Ummantelung mit äußerer Schicht kein Problem dar, die schlechtere Haftung an den Schnittkanten fällt nicht ins Gewicht.

Als Ausgangsstoff für das Kernmaterial werden gebrauchte Glas-, Mineral- oder Carbonfaserverbundstoffe eingesetzt, die aus Glas-, Mineral- oder Carbonfaserverbundstoffabfällen, welche z.B. bei der Demontage von Windkraftanlagen, als Teile von verschrotteten Autos und Booten, in Form alter Surfbretter oder Fahrradrahmen usw. anfallen, erhalten werden. Die Glas-, Mineral- oder Carbonfaserverbundstoffabfälle werden zu Stücken von 0,5 mm bis 5,0 mm in der längsten Abmessung zerkleinert, beispielsweise mit Brechern oder Mühlen. Dabei bleiben die Fasern mit dem Duromer verbunden, werden aber weitgehend aus einer kompakten Masse zu einem faserigen Produkt zerteilt. Diese Fasern, denen Duromer anhaftet und die teils durch Duromer miteinander verklebt sind, bilden den gebrauchten Glas-, Mineral- oder Carbonfaserverbundstoff und lassen sich mit thermoplastischen Polymeren zu einem Granulat formen, dass in an sich bekannter Weise als Profil extrudiert werden kann. Die Stücke und damit die Fasern sollten nicht kürzer als 0,5 mm sein, um eine ausreichende Verstärkung der erfindungsgemäßen Profilteile zu gewährleisten. Andererseits darf die längste Abmessung für die Verarbeitung nicht zu groß sein. Daher sind Abmessungen von 0,75 mm bis 4,0 mm, insbesondere von 1,0 mm bis 3,0 mm, besonders bevorzugt.

Erfindungsgemäß wird zu faserigem Material recycelter Glasfaserverbundstoff, Mineralfaserverbundstoff oder Carbonfaserverbundstoff als Verstärkungsmaterial für thermoplastisches Polymer eingesetzt, da dies, wie durch den Zusatz der Holzfasern in WPC, Profilteile mit der gewünschten Steifigkeit, Bruchfestigkeit, Schlagzähigkeit und Längenausdehnung ergibt. Ein bevorzugter Mineralfaserverbundstoff ist Basaltfaserverbundstoff. Im Vergleich zu WPC ist bei Profilteilen aus Mischungen von thermoplastischem Polymer und Glasfaserverbundstoff, Mineralfaserverbundstoff oder Carbonfaserverbundstoff die thermische Ausdehnung optimiert, d.h. deutlich verringert. Es können auch Gemische von Glasfaserverbundstoff, Mineralfaserverbundstoff und Carbonfaserverbundstoff benutzt werden. Bevorzugt sind Gemische von Glasfaserverbundstoff, Basaltfaserverbundstoff und Carbonfaserverbundstoff, besonders bevorzugt Gemische aus Glasfaserverbundstoff und Carbonfaserverbundstoff. Die Anteile der jeweiligen Faserverbundstoffe können in weiten Grenzen variieren, bei Gemischen von zwei Faserverbundstoffen von 100 Gew.-% des einen bis 100 Gew.-% des anderen. Bei Gemischen aus drei oder mehr Faserverbundstoffen sind geringe Anteile von beispielsweise 1, 5, 10, 15 oder 20 Gew.-% eines ersten und zweiten (oder von noch mehr) Faserverbundstoffes neben einem hohen Anteile eines dritten Faserverbundstoffes von z.B. 60, 65, 70, 75, 80, 85, 90, 95 oder 98 Gew.-% möglich. Ebenso können mittlere Anteile eines oder aller Faserverbundstoffe von beispielsweise 25, 30, 35, 40, 45 oder 50 Gew.-% benutzt werden. Denkbar sind u.a.:
1 bis 15 Gew.-% eines ersten Faserverbundstoffes, z.B. Mineralfaserverbundstoff, und 1 bis 15 Gew.-% eines zweiten Faserverbundstoffes, z.B. Carbonfaserverbundstoff, im Gemisch mit 60 bis 98 Gew.-% eines dritten Faserverbundstoffes, z.B. Glasfaserverbundstoff, oder
10 bis 30 Gew.-% eines ersten Faserverbundstoffes, z.B. Mineralfaserverbundstoff, und 10 bis 30 Gew.-% eines zweiten Faserverbundstoffes, z.B. Glasfaserverbundstoff, im Gemisch mit 40 bis 70 Gew.-% eines dritten Faserverbundstoffes, z.B. Carbonfaserverbundstoff, oder
20 bis 30 Gew.-% eines ersten Faserverbundstoffes, z.B. Basaltfaserverbundstoff, 20 bis 30 Gew.-% eines zweiten Faserverbundstoffes, z.B. Glasfaserverbundstoff A, und 20 bis 30 Gew.-% eines dritten Faserverbundstoffes, z.B. Glasfaserverbundstoff B, im Gemisch mit 20 bis 30 Gew.-% eines vierten Faserverbundstoffes, z.B. Carbonfaserverbundstoff.

Als erstes und zweites thermoplastisches Polymer kommen prinzipiell alle miteinander kompatiblen, thermoplastischen Polymere in Betracht. Es können sowohl einzelne Polymere als auch Gemische von zwei oder mehr Polymeren verwendet werden. Das erste und das zweite Polymer können identisch oder verschieden sein. Die Wahl des Polymers richtet sich nach den weiteren geforderten Eigenschaften, z.B. der Wetterbeständigkeit und dem Preis. Insofern sind Polyolefine oder PVC bevorzugt, insbesondere Polypropylen, HDPE oder PVC-U. Auch Polyester sind brauchbar, insbesondere Polyethylenterephthalat. Das erste und/oder zweite thermoplastische Polymer kann ganz oder teilweise, z.B. zu 50 Gew.-% oder zu 75 Gew.-%, ein Rezyklat sein. Rezyklat meint hier sowohl Produktionsabfälle (z.B. Verschnitt, Material aus der Anlaufphase der Produktion oder aus Produktionsphasen mit fehlerhaftem Produkt etc.) als auch nach der bestimmungsgemäßen Benutzung von aus Polymer hergestellten Produkten aus deren Abfall gewonnenes Material. Aufgrund der Materialreinheit sind Produktionsabfälle als Rezyklat derzeit bevorzugt.

Als Polypropylen sind bevorzugt solche mit einem MFI bei 230 °C von 2 bis 6 g/10min. geeignet. Vorzugsweise wird lichtstabilisiertes Polypropylen benutzt, z.B. mit Ruß und/oder HALS (Abkürzung für hindered amine light stabilizer) lichtstabilisiertes Polypropylen.

HDPE (Abkürzung für Hochdruck-Polyethylen) sind bevorzugt solche mit einem MFI bei 190°C von 0,2 bis 3g/10min geeignet. Diese sind vorzugsweise mit Ruß, und oder HALS (Abkürzung für hindered amine light stabilizer) gegen UV Licht geschützt. Weiterhin sind bevorzugt noch Thermostabilisatoren auf Phenolischer Basis oder secundären Phosphiten im Einsatz.

Als PVC (Abkürzung für Polyvinylchlorid) sind weichmacherfreie oder weichmacherarme PVC-U gut geeignet. Der Weichmacheranteil der Mischung aus thermoplastischem Polymer und recycelter Glasfaser-, Mineralfaser- oder Carbonfaserverbundstoff beträgt von 0 bis 10 Gew.-%, vorzugsweise von 0 bis 6 Gew.-%. PVC Reste enthalten in der Regel von 3 bis 15 Gew.-% Weichmacher. In Kombination mit dem Glasfaser-, Mineralfaser- oder Carbonfaserverbundstoff ergibt sich eine ausreichend dauersteife Mischung.

Die Mischung für den Kern enthält in der Regel von 20 bis 80 Gew.-% des ersten thermoplastischen Polymers und von 80 bis 20 Gew.-% des gebrauchten Glas-, Mineral- oder Carbonfaserverbundstoffs bezogen auf das Gesamtgewicht der Mischung für den Kern. Bevorzugt sind von 30 bis 70 Gew.-% erstes thermoplastisches Polymer und von 70 bis 30 Gew.-% gebrauchter Glas-, Mineral- oder Carbonfaserverbundstoff, besonders bevorzugt von 45 bis 55 Gew.-% erstes thermoplastisches Polymer und von 55 bis 45 Gew.-% gebrauchter Glas-, Mineral- oder Carbonfaserverbundstoff. Es kann ein Gemisch von thermoplastischen Polymeren und/oder ein Gemisch von einem oder mehreren gebrauchten Glasfaserverbundstoffen und/oder einem oder mehreren Mineralfaserverbundstoffen und/oder von einem oder mehreren gebrauchten Carbonfaserverbundstoffen benutzt werden.

Die Mischung kann ein oder mehrere an sich bekannte Additive enthalten, wie zum Beispiel aber nicht ausschließlich:
- Stabilisatoren gegen Licht, UV-Strahlung, Hitze, Oxidation und/oder Degradation während der Verabreitung
- Verarbeitungshilfsmittel
- Schlagzähmodifier, Weichmacher, Antistatikmittel, Flammschutzmittel, Biozide und/oder Haftvermittler
- Pigmente, Farbstoffe und/oder optische Aufheller
- Füllstoffe, z.B. Kreide oder Schwerspat
die auch bereits ganz oder teilweise in dem thermoplastischen Polymer und/oder den gebrauchten Glas-, Mineral- oder Carbonfaserverbundstoffen enthalten sein können.

Der Kern ist erfindungsgemäß zumindest an einer Seite mit einer äußeren Schicht koextrudiert, vorzugsweise von einer äußeren Schicht eingeschlossen, die ein zweites thermoplastisches Polymer enthält und so eine sichere und einfache Verbindung mit der Dekorfolie gewährleistet. Das zweite thermoplastische Polymer kann mit dem ersten thermoplastischen Polymer des Kerns identisch sein. Ebenso kann die äußere Schicht aus einem oder mehreren davon verschiedenen aber miteinander kompatiblen thermoplastischen Polymeren hergestellt werden. In der äußeren Schicht kann gebrauchter Glas-, Mineral- oder Carbonfaserverbundstoff enthalten sein, jedoch weniger als in der Mischung für den Kern. Vorzugsweise ist kein gebrauchter Glas-, Mineral- oder Carbonfaserverbundstoff enthalten oder nur wenig, z.B. bis 25 Gew.-%, oder bis 10 Gew.-%, oder bis 5 Gew.-%, bezogen auf das Gesamtgewicht des Materials für die äußere Schicht.

Geeignete zweite thermoplastische Polymere für die äußere Schicht sind solche, die mit der Mischung des Kerns koextrudiert werden können und dabei eine gute Haftung zwischen Kern und äußerer Schicht sicherstellen. Insofern sind identische thermoplastische Polymere in Kern und äußerer Schicht bevorzugt. Kompatible Polymere sind ebenso möglich. Kompatibel heißt, dass die Polymere miteinander mischbar sind und so beim Koextrudieren in der Grenzschicht zwischen Kern und äußerer Schicht eine feste Verbindung ausbilden. Beispielsweise sind verschiedene Polypropylentypen in der Regel kompatibel sowie Polypropylene und Polyethylene bzw. Mischungen davon miteinander. Polyolefine der äußeren Schicht sind typischerweise durch Pigmente und/oder UV- und/oder Lichtstabilisatoren besonders witterungsbeständig eingestellt.

Bevorzugt ist das zweite thermoplastische Polymer der äußeren Schicht bei einem Kern mit Polyolefin als Polymer auch ein Polyolefin, insbesondere ein Polypropylen, und bei einem Kern mit PVC als Polymer ein PVC-U (unplastisized PVC), d.h. ein weichmacherfreies PVC. Analog wird bei einem Kern mit Polyester als Polymer bevorzugt ein Polyester als in der äußeren Schicht verwendet.

Im Fall von PVC als erstes thermoplastisches Polymer sind andere PVC, Polyacrylate oder PVC-Acrylatmischungen oder PVC-PET-Mischungen und -Copolymere kompatibel und bevorzugte zweite thermoplastische Polymere. Polyacrylate sind im PVC als Schlagzähmodifier einsetzbar. Mischungen aus PVC und Polyacrylat sind sehr kompatibel. Grenzschichten zu reinem Polyacrylat weisen eine sehr gute Haftung auf.

Eine geeignete PVC Rezeptur für eine pigmentierte äußere Schicht umfasst z. B.
100 Gew.-Teile PVC, z.B. mit einem K-Wert von 66 bis 68
10 - 15 Gew.-Teile Füllstoff, z.B.Calciumcarbonat
0 - 6 Gew.-Teile weiteres Polymer, z.B. chloriertes Polyethylen
0 - 6 Gew.-Teile Schlagzähmodifier, z.B. ACR-Schlagzähmodifier
3 - 4 Gew.-Teile Stabilisator, z.B. Calcium/Zink-Stabilisator
1 - 1,5 Gew.-Teile Pigment
1 - 1,5 Gew. Teile UV Stabilisatoren.

Im Falle von Polypropylen als erstes thermoplastisches Polymer umfasst eine geeignet äußere Schicht z.B.:
0 - 100 Gew.-Teile PP Homopolymer
0 - 100 Gew.- Teile PP Copolymer
0 - 100 Gew.- Teile HDPE
0 - 50 Gew.- Teile Füllstoffe
0,5 - 2,5 Gew.-Teile Stabilisatoren, z.B. phenolische Antioxidantien
0,5 - 2,0 Gew.-Teile Pigment, z.B. Ruß.
Es versteht sich, dass die Summe der Komponenten einer Schicht 100 Gew.-% beträgt.

Außerdem ist es möglich, eine oder mehrere Zwischenschichten vorzusehen, deren Polymer-Zusammensetzung zwischen der der äußeren Schicht und der des Kerns liegt bzw. deren Polymer-Zusammensetzungen sich Schritt für Schritt ändern. So kann beispielsweise eine äußere Schicht aus dem zweiten thermoplastischen Polymer mit z.B. bis zu 5 Gew.-% oder bis zu 1 Gew.-% gebrauchtem Glas-, Mineral- oder Carbonfaserverbundstoff über eine Zwischenschicht aus z.B. 60 bis 90 Gew.-%, vorzugsweise 70 bis 80 Gew.-%, zweitem thermoplastischem Polymer und z.B. 10 bis 40 Gew.-%, vorzugsweise 20 bis 30 Gew.-%, Mischung aus erstem thermoplastischem Polymer und gebrauchtem Glas-, Mineral- oder Carbonfaserverbundstoff eingesetzt werden. Oder es sind zwei Zwischenschichten vorgesehen, eine erste am Kern mit z.B. 20 bis 50 Gew.-% Mischung aus erstem thermoplastischem Polymer und gebrauchtem Glas-, Mineral- oder Carbonfaserverbundstoff und z.B. 50 bis 80 Gew.-% zweitem thermoplastischem Polymer und eine zweite an der äußeren Schicht mit keinem oder z.B. bis zu 5 Gew.-% oder bis zu 1 Gew.-% gebrauchtem Glas-, Mineral- oder Carbonfaserverbundstoff mit z.B. 10 bis 30 Gew.-% Mischung aus erstem thermoplastischem Polymer und gebrauchtem Glas-, Mineral- oder Carbonfaserverbundstoff und z.B. 70 bis 90 Gew.-% zweitem thermoplastischem Polymer. Die Prozentangaben beziehen sich hier jeweils auf das Gesamtgewicht des Materials der jeweiligen Schicht. Die Zwischenschicht(en) enthält (enthalten) bevorzugt Polypropylen wenn ein Polypropylenbasierter Kern im Einsatz ist oder PVC bei einem PVC basiertem Kern - auch ganz oder teilweise recycelt - als thermoplastisches Polymer. Die Zwischenschichten sind immer mit dem Polymer des Kerns und der Außenschicht kompatibel.

Die äußere Schicht und Zwischenschicht(en) soweit vorhanden kann/können ein oder mehrere Additive enthalten, wie zum Beispiel aber nicht ausschließlich:
- Stabilisatoren gegen UV-Strahlung, Licht, Hitze, Oxidation und/oder Degradation bei der Verarbeitung
- Verarbeitungungshilfsmittel, z.B. Extrusionshilfsmittel
- Schlagzähmodifier, Weichmacher, Antistatikmittel, Flammschutzmittel und/oder Biozide, Haftvermittler
- Pigmente, Farbstoffe und/oder optische Aufheller
- Füllstoffe wie Kreide, Schwerspat und/oder Verstärkungsmittel
die auch bereits ganz oder teilweise in dem thermoplastischen Polymer und ggfs. den gebrauchten Glas-, Mineral- oder Carbonfaserverbundstoffen enthalten sein können. Neben den thermoplastischen Polymeren und ggfs. dem gebrauchten Glas-, Mineral- oder Carbonfaserverbundstoff können wie oben erwähnt ein oder mehrere Additive enthalten sein, die von Schicht zu Schicht gleich oder unterschiedlich sein können. Typischerweise unterscheiden sich die Mengen, da das/die Additiv(e) üblicherweise den Polymeren bereits zugefügt ist(sind) und somit die unterschiedlichen Mengen Polymere auch unterschiedliche Mengen Additiv einbringen.

Der Kern und die äußere Schicht sowie ggfs. eine oder mehrere vorhandene Zwischenschicht(en) werden koextrudiert. Hierfür werden die Mischung für den Kern und das Material für die äußere Schicht sowie ggfs. das Material für eine oder mehrere Zwischenschichten in Extrudern aufgeschmolzen, ggfs. auch darin angemischt bzw. mit Zusätzen gemischt, und dann durch eine Düse mit dem gewünschten Profilquerschnitt geformt. Die koextrudierte Schicht kann das Profil - bis auf Schnittkanten - vollständig ummanteln oder nur die Teilbereiche des Kerns ummanteln, die später mit der Dekorfolie verbunden werden. Das aus der Düse des Extruders austretende Profil kann in an sich bekannter Weise mit Luft und/oder Wasser gekühlt werden und wird typischerweise auf die gewünschte Länge geschnitten.

Übliche Profilformen sind u.a. rechteckig, quadratisch, halbrund, rund, oval etc. Innen können Hohlräume vorgesehen sein, um das Gewicht zu verringern bzw. Material zu sparen. Die Oberfläche kann glatt oder rau sein, z.B. geriffelt. Für eine Nutzung als Terrassendiele eignen sich beispielsweise rechteckige Profilteile, insbesondere mit gefasten oder abgerundeten Kanten, die eine glatte oder geriffelte Oberseite haben können.

Nuten an beiden Schmalseiten oder Nuten an einer und Federn an der gegenüberliegenden Schmalseite sind für eine einfache Verlegung vorteilhaft, soweit eine geschlossenen Oberfläche erwünscht ist.

Die Breite kann bei Terrassendielen z.B. von 80 bis 250 mm, bevorzugt von 100 bis 300 mm, besonders bevorzugt von 120 bis 150 mm, betragen. Stärken im Bereich von 10 bis 40 mm, bevorzugt von 15 bis 30 mm, besonders bevorzugt von 18 bis 20 mm, sind brauchbar. Auch besonders dicke Profilteile mit Stärken von 45 mm, 50 mm oder noch mehr sind möglich. Die Länge einer Diele liegt üblicherweise im Bereich von mindestens 1,2 m oder 1,5 m oder 3,0 m bis maximal 2,0 m oder 3,0 m oder 6,0 m oder noch mehr.

Für andere Anwendungen der erfindungsgemäßen Profilteile werden die Abmessungen entsprechend gewählt. Pfosten sind häufig quadratisch mit Seitenlängen von 3 bis 15 cm, bevorzugt 5 bis 10 cm. Auch rechteckige Pfosten mit Querschnittsmaßen von 2 bis 10 cm mal 5 bis 15 cm, z.B. 2, 3, oder 5 cm mal 5 bis 10 cm, sind möglich. Typische Längen, d.h. Pfostenhöhen, betragen von 15 cm bis 3 m, bevorzugt von 50 cm oder 1 m bis 2,5 m oder 2 m. Auch runde Pfähle mit ebensolchen Längen, d.h. Höhen, und Querschnitten von 2 cm bis 15 cm, bevorzugt 3 oder 5 cm bis 10 cm sind möglich.

Profilteile für Zaunlatten können dieselben Maße wie oben für Dielen genannt haben. Da sie nur sich selbst tragen müssen sind Dicken im unteren beschriebenen Bereich sinnvoll. Je nach gewünschter Optik können Breiten im oberen Bereich und auch darüber hinaus gewählt werden.

Es lassen sich auch flächigere Teile herstellen, indem erfindungsgemäße Profilteile als Latten in Rahmen, die vorzugsweise ebenfalls erfindungsgemäße Profilteile sind, eingesetzt werden. Hier sind für die Rahmen dieselben Maße wie für Pfosten brauchbar und für Latten dieselben Maße wie oben für Zaunlatten beschrieben. Solche Teile können ebenfalls Zaunelemente bilden, oder als Sichtschutzelemente, Türen, etc. verwendet werden.

Sofern die notwendigen, mechanischen Eigenschaften wie Tragfähigkeit und Steifigkeit für den Verwendungszweck des Profilteils dies zulassen, ist es bevorzugt, den Kern mit einer oder mehreren Hohlkammern auszubilden. Dadurch lässt sich Material einsparen. Wie von anderen Werkstoffen bekannt, werden die Abmessungen der Hohlkammer(n) so gewählt, dass das verbleibende Material eine für die mechanische Belastung im Gebrauch und ggfs. das Ein/Anbringen von Verbindungsmitteln erforderliche Stärke aufweist.

Beispielsweise können Zaunpfosten als Hohlprofil geformt werden oder Hohlkammern geeigneter Länge aufweisen. Die Materialstärke an Stellen, wo Zaunelemente oder deren Träger z.B. mit Schrauben angebracht werden, sollte ausreichen um ein Ausreißen der Verbindungsmittel zu verhindern. Einige cm, z.B. von 0,5 oder 1 cm bis 2 oder 5 cm reichen dafür normalerweise aus.

Zur optischen Gestaltung und/oder Optimierung von Gebrauchs- oder Pflegeeigenschaften wird das mehrschichtige Profilteil zumindest an einer Seite mit einer Dekorfolie verbunden, die eine gefärbte und/oder bedruckte Basisfolie aus PVC, Polyacrylat oder Polyolefin umfasst, die mit einer transparenten Schmelzbeschichtung auf Polyurethanbasis versehen ist. Es kann auch mit der Dekorfolie ummantelt werden oder an allen bei Gebrauch des Profilteils sichtbaren Seiten bzw. Seitenbereichen mit der Dekorfolie verbunden sein. Bei Terrassendielen bietet es sich z.B. an, die Oberseite mit Dekofolie zu verbinden und die senkrechten Seiten, d.h. die Schmalseiten, zumindest teilweise. Bei Profilteilen, welche in vertikaler Anordnung genutzt werden, wird analog die sichtbare Seite mit Dekorfolie verbunden. Sind beide Seiten, z.B. bei Zaunelementen, oder alle Seiten, z.B. bei Pfosten, sichtbar, so werden vorzugsweise auch beide bzw. alle Seiten mit Dekorfolie verbunden.

Als Dekorfolie eignen sich alle Folien, die eine ausreichende Beständigkeit unter den Nutzungsbedingungen des Profilteils aufweisen, insbesondere thermische und UV-Beständigkeit, Kratzfestigkeit und Dauerhaftigkeit. Außerdem sollte die Folie bei einer Verwendung des Profilteils als Bodenbelag eine Rutschhemmung bereitstellen.

Die Dekorfolie umfasst demgemäß eine bedruckte Basisfolie aus PVC, Polyacrylat oder Polyolefin, die mit einer transparenten Schmelzbeschichtung auf Polyurethanbasis (kurz PUR-Schmelzbeschichtung) versehen und ggfs. lackiert ist. Bevorzugte Dekorfolien für Profilteile, welche als Terrassendielen und andere Profilteile im Außenbereich benutzt werden sollen, sind daher z.B. die in der DE 10 2020 131 858 A1 und WO 2022/078946 A1 beschriebenen UV-Schutzfolien.

Die PUR-Schmelzbeschichtung ist zur Erhöhung der Kratzfestigkeit und Rutschsicherheit vorzugsweise abriebbeständig, indem die Schmelzmasse Partikel mit einer Mohshärte von ≥ 7, insbesondere ≥ 9, enthält. Brauchbare Partikel sind z.B. als Schleifmittel verwendete Hartstoffkörner, insbesondere natürliche Kornwerkstoffe wie Flint, Quarz, Korund, Schmirgel, Granat und synthetische Kornwerkstoffe wie synthetische Korunde, Siliziumcarbide, Chromoxide, kubisches Bornitrid. Seltene bzw. teure Kornwerkstoffe wie Diamant sind technisch möglich würden in der Praxis aber kaum eingesetzt werden.

Die Rutschsicherheit wird vorzugsweise durch eine Kombination einer abriebbeständigen PUR-Schmelzbeschichtung mit einer Strukturierung der Dekorfolie gewährleistet. Die Strukturierung ist in einer bevorzugten Variante besonders einfach durch eine geprägte zweite PUR-Schmelzbeschichtung als Zwischenschicht unterhalb der PUR-Schmelzbeschichtung erhältlich. In einer weiteren bevorzugten Variante wird die Strukturierung durch den Auftrag einer Schicht der Dekorfolie mittels Walzen, von denen eine strukturiert ist, besonders effizient erreicht. Vorzugsweise wird die PUR-Schmelzbeschichtung bzw. eine zweite PUR-Schmelzbeschichtung als Zwischenschicht oder eine Lackschicht auf diese Weise aufgetragen. Eine zweite PUR-Schmelzbeschichtung als Zwischenschicht unterhalb der PUR-Schmelzbeschichtung enthält bevorzugt weniger Partikel als die abriebbeständige PUR-Schmelzbeschichtung, insbesondere keine Partikel.

Für eine Nutzung des Profilteils als Teil von Outdoormöbeln, Zaunelement etc., d.h. an senkrechten Oberflächen, ist die Rutschfestigkeit nicht wichtig, so dass hierfür analoge Dekorfolien ohne die Partikel bzw. mit weniger Partikeln in der (den) Schmelzbeschichtung(en) bevorzugt sind.

Die Verbindung der Dekorfolie mit der äußeren Schicht des Profilteils erfolgt beispielsweise über eine Kleberlaminierung, z.B. mittels Polyurethanhotmeltkleber, reaktivem Polyolefinhotmelt oder reaktivem Silan-terminiertem Hotmelt. Zur Optimierung der Haftung kann die Dekorfolie auf der der äußeren Schicht zugewandten Oberfläche mit einem Primer versehen werden. Beispielsweise ist ein Primer auf Basis von Vinylchlorid-Vinylacetat-Copolymer für PVC, Polyacrylat und PVC-Polyacrylat Folien gut geeignet. Für Polyolefinfolien eignet sich u.a. ein 2-Komponenten Polyurethanprimer. Die Dekorfolie kann alternativ oder zusätzlich auf der der äußeren Schicht zugewandten Oberfläche einer Plasmastrahlung oder Koronabehandlung oder anderen Oberflächenbehandlung unterzogen werden.

Die Erfindung soll anhand der folgenden Figuren und Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung. Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

In den Figuren zeigt
Figur 1 ein erfindungsgemäßes Profilteil im Querschnitt,
Figur 2 eine weiteres erfindungsgemäßes Profilteil im Querschnitt
Figur 3 noch ein weiteres erfindungsgemäßes Profilteil im Querschnitt, und
Figur 4 eine vierte Variante eines erfindungsgemäßen Profilteils im Querschnitt.
In den Figuren ist zur Verdeutlichung ein Abstand zwischen Kern 1, äußerer Schicht 2 bzw. Zwischenschicht 2b und äußerer Schicht 2a, sowie Dekorfolie 3 gezeichnet, der in der Realität nicht existiert. Zudem sind die Teile nicht maßstäblich dargestellt, d.h. die Schichten um den Kern 1 sind im Verhältnis mit zu großer Stärke dargestellt.

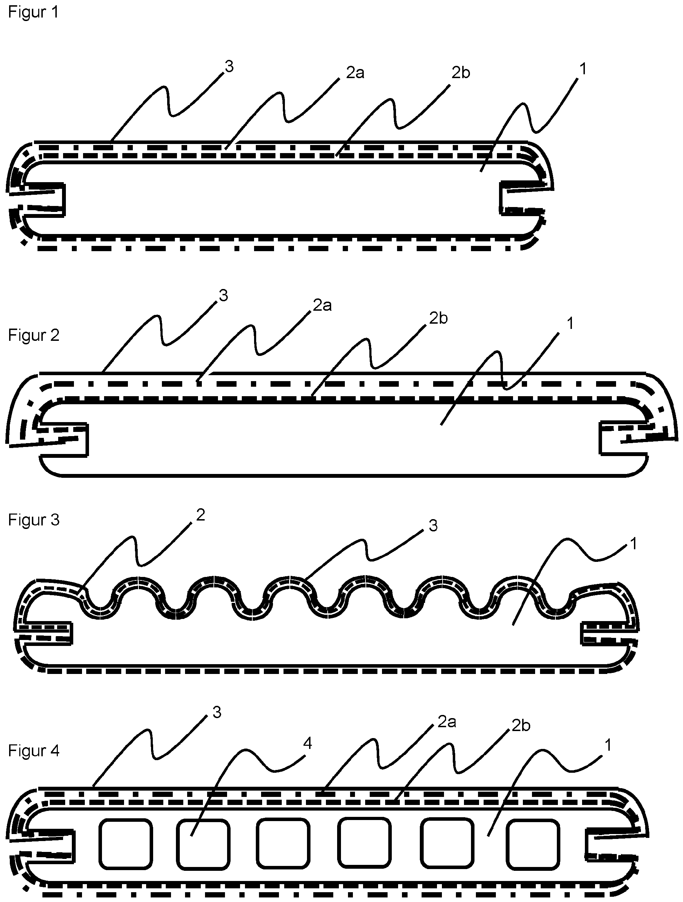

Figur 1 zeigt ein erfindungsgemäßes Profilteil im Querschnitt. Der Kern 1 hat eine im wesentlichen rechteckige Form, wobei an den Schmalseiten Nuten vorgesehen und die oberen sowie unteren Kanten abgerundet sind. Die äußere Schicht 2a und eine Zwischenschicht 2b umschließen den Kern 1 vollständig. Die äußere Schicht 2a wird aus Polypropylen oder PVC, die Zwischenschicht 2b aus 75 Gew.-% Polypropylen oder PVC und 25 Gew.-% Mischung von Polypropylen oder PVC mit gebrauchtem Glasfaserverbundstoff gefertigt. Der Kern 1 enthält eine Mischung aus 30 bis 70 Gew.-% recyceltem Polypropylen oder PVC mit 30 bis 70 Gew.-% gebrauchtem Glasfaserverbundstoff. An der Oberseite sowie bis in die Nuten hinein ist eine Dekorfolie 3 mit der äußeren Schicht 2a verbunden. Im gezeigten Beispiel ist eine Nutzung des Profilteils als Terrassendiele vorgesehen, so dass eine rutschfeste Dekorfolie 3 wie in DE 10 2020 131 858 A1 und WO 2022/078946 A1 beschrieben zum Einsatz kommt.

Figur 2 zeigt ein weiteres erfindungsgemäßes Profilteil im Querschnitt. Der Kern 1 hat eine im wesentlichen rechteckige Form, wobei an den Schmalseiten Nuten vorgesehen und die oberen sowie unteren Kanten abgerundet sind. Die äußere Schicht 2a und eine Zwischenschicht 2b umschließen den Kern 1 auf der Oberseite und teils in den Nuten und beide sind mit der Dekorfolie 3 ummantelt. Die äußere Schicht 2a wird aus Polypropylen oder PVC, die Zwischenschicht 2b aus 75 Gew.-% Polypropylen oder PVC und 25 Gew.-% Mischung von Polypropylen oder PVC mit gebrauchtem Glasfaserverbundstoff gefertigt. Der Kern enthält eine Mischung aus 30 bis 70 Gew.-% recyceltem Polypropylen oder PVC mit 30 bis 70 Gew.-% gebrauchtem Glasfaserverbundstoff. An der Oberseite sowie bis in die Nuten hinein ist eine Dekorfolie 3 mit der äußeren Schicht 2a verbunden. Im gezeigten Beispiel ist eine Nutzung des Profilteils als Terrassendiele vorgesehen, so dass eine rutschfeste Dekorfolie 3 wie in DE 10 2020 131 858 A1 und WO 2022/078946 A1 beschrieben zum Einsatz kommt.

Figur 3 zeigt noch ein weiteres Profilteil im Querschnitt. Der Kern 1 hat eine im wesentlichen rechteckige Form, wobei an den Schmalseiten Nuten vorgesehen und die oberen sowie unteren Kanten abgerundet sind. Die Oberfläche des Kerns und der koextrudierten äußeren Schicht 2 weisen eine gerillte Kontur auf. Die äußere Schicht 2 umschließt den Kern 1 vollständig. Die äußere Schicht 2 wird aus Polypropylen oder PVC gefertigt. Der Kern 1 enthält eine Mischung aus 30 bis 70 Gew.-% recyceltem Polypropylen oder PVC mit 30 bis 70 Gew.-% gebrauchtem Glasfaserverbundstoff. An der Oberseite sowie bis in die Nuten hinein ist eine Dekorfolie 3 mit der äußeren Schicht 2 verbunden. Im gezeigten Beispiel ist eine Nutzung des Profilteils als Terrassendiele vorgesehen, so dass eine rutschfeste Dekorfolie 3 wie in DE 10 2020 131 858 A1 und WO 2022/078946 A1 beschrieben zum Einsatz kommt.

Figur 4 zeigt eine vierte Variante eines erfindungsgemäßen Profilteils im Querschnitt. Der Kern 1 hat eine im wesentlichen rechteckige Form, wobei an den Schmalseiten Nuten vorgesehen und die oberen sowie unteren Kanten abgerundet sind. Die äußere Schicht 2a und eine Zwischenschicht 2b umschließen den Kern 1 vollständig. Die äußere Schicht 2a wird aus Polypropylen oder PVC, die Zwischenschicht 2b aus 75 Gew.-% Polypropylen oder PVC und 25 Gew.-% Mischung von Polypropylen oder PVC mit gebrauchtem Glasfaserverbundstoff gefertigt. Der Kern 1 enthält eine Mischung aus 30 bis 70 Gew.-% recyceltem Polypropylen oder PVC mit 30 bis 70 Gew.-% gebrauchtem Glasfaserverbundstoff. Das Profilteil hat im Kern Hohlkammern 4 die zur Materialeinsparung dienen. An der Oberseite sowie bis in die Nuten hinein ist eine Dekorfolie 3 mit der äußeren Schicht 2a verbunden. Im gezeigten Beispiel ist eine Nutzung des Profilteils als Terrassendiele vorgesehen, so dass eine rutschfeste Dekorfolie 3 wie in DE 10 2020 131 858 A1 und WO 2022/078946 A1 beschrieben zum Einsatz kommt.

### Beispiel 1

Ein erfindungsgemäßes Profilteil wird aus einem Kern, der recycelten Faserverbundstoff und PVC enthält, und einem PVC mit der Zusammensetzung:

| | |
|---|---|
| 100 Gew.-Teile | PVC, K-Wert 66-68, z.B. Inovyn PVC 267 RC |
| 10 - 15 Gew.-Teile | Calciumcarbonat, z.B. Hydrocarb 95 T |
| 0 - 6 Gew.-Teile | Chloriertes Polyethylen, z.B. CPE135 A |
| 0 - 6 Gew.-Teile | ACR-Schlagzähmodifier, z.B. Kane FM 56 |
| 3 - 4 Gew.-Teile | Calcium/Zink-Stabilisator, z.B. Bäropan |
| 1 - 1,5 Gew.-Teile | Pigment, z.B. Braunpigment Bayka PVC |

als äußere Schicht koextrudiert. Der Kern weist die typische Form einer Terrassendiele auf, wie sie im Querschnitt in Figur 1 gezeigt ist. Die Länge wird durch Abschneiden des Strangs im gewünschten Abstand festgelegt. Anschließend wird das koextrudierte Profil komplett oder an der Oberseite und bis in die seitlichen Nuten hinein mit einer Dekorfolie gemäß WO 2022/078946 A1 verbunden. Hierzu wird beispielsweise die Dekorfolie unterseitig und das Profil oberseitig geprimert und dann mittels eines reaktiven Schmelzklebers an der Unterseite der Dekorfolie durch Einwirken von gleichmäßigem Druck die Verbindung hergestellt.

### Bezugszeichenliste

- 1: Kern
- 2, 2a: äußere Schicht
- 2b: Zwischenschicht
- 3: Dekorfolie
- 4: Hohlkammer

## Patentansprüche

1. Mehrschichtiges Profilteil umfassend:
- einen Kern (1) aus einer Mischung enthaltend gebrauchten Glas-, Mineral- oder Carbonfaserverbundstoff und ein erstes thermoplastisches Polymer,
- eine äußere Schicht (2, 2a) enthaltend ein zweites thermoplastisches Polymer, das mit dem ersten thermoplastischen Polymer kompatibel ist und dem kein oder eine geringere Menge an gebrauchtem Glas-, Mineral- oder Carbonfaserverbundstoff als der Mischung des Kerns (1) zugefügt ist, und die mit dem Kern (1) zumindest an einer Seite koextrudiert ist,
wobei das Profilteil zumindest an einer Seite, an der der Kern (1) von der äußeren Schicht (2, 2a) abgedeckt ist, eine Dekorfolie (3) aufweist, die eine gefärbte und/oder bedruckte Basisfolie aus PVC, Polyacrylat oder Polyolefin umfasst, die mit einer transparenten Schmelzbeschichtung auf Polyurethanbasis versehen ist.

2. Mehrschichtiges Profilteil gemäß Anspruch 1, **dadurch gekennzeichnet, dass** der gebrauchte Glas-, Mineral- oder Carbonfaserverbundstoff Fasern enthält, denen Duromer anhaftet und die teils durch Duromer miteinander verklebt sind, wobei bevorzugt die Fasern nicht kürzer als 0,5 mm sind, besonders bevorzugt von 0,75 mm bis 4,0 mm, insbesondere von 1,0 mm bis 3,0 mm, lang sind.

3. Mehrschichtiges Profilteil gemäß Anspruch 1 oder 2, **dadurch gekennzeichnet, dass** der gebrauchte Glas-, Mineral- oder Carbonfaserverbundstoff ein Gemisch von Glasfaserverbundstoff, Mineralfaserverbundstoff und Carbonfaserverbundstoff enthält, oder vorzugsweise ein Gemisch von Glasfaserverbundstoff und Carbonfaserverbundstoff.

4. Mehrschichtiges Profilteil gemäß einem der Ansprüche 1 bis 3, **dadurch gekennzeichnet, dass** der Mineralfaserverbundsoff ein Basaltfaserverbundstoff ist.

5. Mehrschichtiges Profilteil gemäß einem der Ansprüche 1 bis 4, **dadurch gekennzeichnet, dass** der Kern (1) von 20 bis 80 Gew.-%, bevorzugt von 30 bis 70 Gew.-%, besonders bevorzugt von 45 bis 55 Gew.-%, des ersten thermoplastischen Polymers und von 80 bis 20 Gew.-%, bevorzugt von 70 bis 30 Gew.-%, besonders bevorzugt von 55 bis 45 Gew.-%, des gebrauchten Glas-, Mineral- oder Carbonfaserverbundstoffs bezogen auf das Gesamtgewicht der Mischung für den Kern (1) enthält.

6. Mehrschichtiges Profilteil gemäß einem der Ansprüche 1 bis 5, **dadurch gekennzeichnet, dass** das erste und/oder das zweite thermoplastische Polymer ein Polyolefin, Polyester oder PVC ist, insbesondere ein Polypropylen, ein HDPE, ein Polyethylenterephthalat oder ein PVC-U.

7. Mehrschichtiges Profilteil gemäß einem der Ansprüche 1 bis 6, **dadurch gekennzeichnet, dass** die Mischung des Kerns (1) und/oder die äußere Schicht (2, 2a) ein oder mehrere Additive enthält, insbesondere
- Stabilisator(en) gegen Licht, UV-Strahlung, Hitze, Oxidation, und/oder gegen Degradation bei der Verarbeitung
- Verarbeitungshilfsmittel
- Schlagzähmodifier, Weichmacher, Antistatikmittel, Flammschutzmittel, Biozide und/oder Haftvermittler
- Pigmente, Farbstoffe und/oder optische Aufheller
- Füllstoffe wie z.B. Kreide, Schwerspat, Talkum.

8. Mehrschichtiges Profilteil gemäß einem der Ansprüche 1 bis 7, **dadurch gekennzeichnet, dass** die äußere Schicht (2, 2a) bezogen auf das Gesamtgewicht des Materials für die äußere Schicht ≤ 25 Gew.-% oder ≤ 10 Gew.-% oder ≤ 5 Gew.-% gebrauchten Glas-, Mineral- oder Carbonfaserverbundstoff enthält.

9. Mehrschichtiges Profilteil gemäß einem der Ansprüche 1 bis 8, **dadurch gekennzeichnet, dass** zwischen dem Kern (1) und der äußeren Schicht (2, 2a) ein oder mehrere Zwischenschicht(en) (2b) enthaltend ein Gemisch (Gemische) von erstem und zweitem thermoplastischem Polymer koextrudiert ist (sind), wobei die Polymer-Zusammensetzung des Gemischs der Zwischenschicht (2b) zwischen der der äußeren Schicht (2a) und der des Kerns (1) liegt oder die Polymer-Zusammensetzungen der Gemische der Zwischenschichten sich Schritt für Schritt zwischen der der äußeren Schicht (2a) und der des Kerns (1) ändern.

10. Mehrschichtiges Profilteil gemäß Anspruch 9, **dadurch gekennzeichnet, dass** das (die) Gemisch(e) der Zwischenschicht(en) (2b) ein oder mehrere Additive enthält (enthalten), insbesondere
- Stabilisator(en) gegen Licht, UV-Strahlung, Hitze, Oxidation, und/oder gegen Degradation bei der Verarbeitung
- Verarbeitungshilfsmittel
- Schlagzähmodifier, Weichmacher, Antistatikmittel, Flammschutzmittel, Biozide und/oder Haftvermittler
- Pigmente, Farbstoffe und/oder optische Aufheller
- Füllstoffe wie z.B. Kreide, Schwerspat, Talkum.

11. Mehrschichtiges Profilteil gemäß einem der Ansprüche 1 bis 10, **dadurch gekennzeichnet, dass** die Schmelzbeschichtung auf Polyurethanbasis durch einen Gehalt an Partikeln abriebbeständig ist und/oder die Dekorfolie (3) eine weitere, tansparente Schmelzbeschichtung auf Polyurethanbasis zwischen Basisfolie und Schmelzbeschichtung auf Polyurethanbasis umfasst und/oder die Dekorfolie (3) einen transparenten Lack als oberste Schicht aufweist.

12. Mehrschichtiges Profilteil gemäß einem der Ansprüche 1 bis 11, **dadurch gekennzeichnet, dass** die Dekorfolie (3) strukturiert ist, insbesondere durch eine strukturierte Schmelzbeschichtung auf Polyurethanbasis und/oder eine strukturierte Lackschicht.

13. Verfahren zur Herstellung von Profilteilen, insbesondere von Profilteilen gemäß einem der Ansprüche 1 bis 12,wobei ein Kern (1) enthaltend eine Mischung von gebrauchtem Glas-, Mineral- oder Carbonfaserverbundstoff mit einem ersten thermoplastischen Polymer zumindest an einer Seite mit einer äußeren Schicht (2, 2a) enthaltend ein zweites thermoplastisches Polymer, das mit dem ersten thermoplastischen Polymer kompatibel ist und dem kein oder eine geringere Menge an gebrauchtem Glas-, Mineral- oder Carbonfaserverbundstoff als der Mischung des Kerns (1) zugefügt ist, koextrudiert wird und wobei das Profilteil zumindest an einer Seite, an der die äußere Schicht (2, 2a) koextrudiert wurde, mit einer Dekorfolie (3) verbunden wird, die eine gefärbte und/oder bedruckte Basisfolie aus PVC, Polyacrylat oder Polyolefin umfasst, die mit einer transparenten Schmelzbeschichtung auf Polyurethanbasis versehen ist.

14. Verwendung von gebrauchtem Glas-, Mineral- oder Carbonfaserverbundstoff als Faserverstärkung für ein erstes thermoplastisches Polymer zur Herstellung von Profilteilen, insbesondere von Profilteilen gemäß einem der Ansprüche 1 bis 12, wobei der gebrauchte Glas-, Mineral- oder Carbonfaserverbundstoff mit dem ersten thermoplastischen Polymer gemischt wird, diese Mischung als Kern (1) zumindest an einer Seite mit einer äußeren Schicht (2, 2a) enthaltend ein zweites thermoplastisches Polymer, das mit dem ersten thermoplastischen Polymer kompatibel ist und dem kein oder eine geringere Menge an gebrauchten Glas-, Mineral- oder Carbonfaserverbundstoff als der Mischung des Kerns (1) zugefügt ist, koextrudiert wird und das Profilteil zumindest an einer Seite, an der die äußere Schicht (2, 2a) koextrudiert wurde, mit einer Dekorfolie (3) verbunden wird, die Dekorfolie (3) eine gefärbte und/oder bedruckte Basisfolie aus PVC, Polyacrylat oder Polyolefin umfasst, die mit einer transparenten Schmelzbeschichtung auf Polyurethanbasis versehen ist.

15. Verfahren gemäß Anspruch 13 oder Verwendung gemäß Anspruch 14, **dadurch gekennzeichnet, dass** der gebrauchte Glas-, Mineral- oder Carbonfaserverbundstoff aus Glas-, Mineral- oder Carbonfaserverbundstoff erhalten wird, der als Abfall z.B. bei der Demontage von Windkraftanlagen, als Teile von verschrotteten Autos und Booten, in Form alter Surfbretter oder Fahrradrahmen anfällt und zu Stücken von 0,5 mm bis 5,0 mm in der längsten Abmessung zerkleinert wird, beispielsweise mit Brechern oder Mühlen, wobei die Fasern mit dem Duromer verbunden bleiben, aber weitgehend aus einer kompakten Masse zu einem faserigen Produkt zerteilt werden, und dass die Fasern, denen Duromer anhaftet und die teils durch Duromer miteinander verklebt sind, mit dem ersten und/oder zweiten thermoplastischen Polymer gemischt und zu einem Granulat geformt werden.

16. Verfahren gemäß Anspruch 13 oder 15 oder Verwendung gemäß Anspruch 14 oder 15, **dadurch gekennzeichnet, dass** zwischen dem Kern (1) und der äußeren Schicht (2, 2a) ein oder mehrere Zwischenschicht(en) (2b) enthaltend ein Gemisch (Gemische) von erstem und zweitem thermoplastischem Polymer koextrudiert wird (werden), wobei die Polymer-Zusammensetzung des Gemischs der Zwischenschicht (2b) zwischen der der äußeren Schicht (2a) und der des Kerns (1) liegt oder die Polymer-Zusammensetzungen der Gemische der Zwischenschichten sich Schritt für Schritt zwischen der der äußeren Schicht (2a) und der des Kerns (1) ändern, wobei die äußere Schicht (2, 2a) den Kern (1) teilweise oder vollständig ummantelt.
